# FASCICULE DE BREVET EUROPEEN

(11) **EP 2 552 687 B1**
(45) Date de publication et mention de la délivrance du brevet: **05.03.2014**
(21) Numéro de dépôt: 11711528.7
(22) Date de dépôt: 28.03.2011
(51) Int. Cl.: B32B 17/10

(54) **VITRAGE RESISTANT AU FEU**
FEUERFESTE VERGLASUNG
FIRE-RESISTANT GLAZING

(30) Priorité: 29.03.2010 BE 201000196
(43) Date de publication de la demande: 06.02.2013
(73) Titulaire: AGC Glass Europe, 1170 Bruxelles (Watermael-Boitsfort) (BE)
(72) Inventeur: GOELFF, Pierre, B-6040 Jumet (BE)
(74) Mandataire: Le Vaguerèse, Sylvain Jacques
(86) Numéro de dépôt international: PCT/EP2011/054706
(87) Numéro de publication internationale: WO 2011/120909

(56) Documents cités:
- EP-A1- 2 111 977
- DE-C1- 19 916 506

## Description

La présente invention concerne des vitrages transparents résistant au feu, et comprenant au moins une couche de matériau intumescent constitué de silicate alcalin.

L'utilisation des silicates alcalins répond à diverses nécessités. Il doit s'agir de matériaux qui offrent une bonne protection lorsque les vitrages sont exposés au feu. Ceci est obtenu par l'expansion de ces silicates sous forme d'une mousse réfractaire qui protège contre la propagation à la fois des flammes et du rayonnement. Les matériaux en question doivent aussi présenter une grande transparence avant toute exposition au feu. Ils doivent aussi ne présenter aucun défaut tel que voile ou bulle. Enfin les vitrages doivent encore offrir une résistance mécanique suffisante tenant compte de l'utilisation envisagée. Les vitrages doivent ainsi souvent présenter une résistance adéquate à ce qui est nommé «choc mou».

Les produits intumescents à base de silicates alcalins présentent des qualités réfractaires d'autant plus élevées que le rapport molaire SiO₂/M₂O est lui-même plus élevé, M étant un métal alcalin. Mais il est connu que les produits les plus réfractaires sont aussi très peu plastiques. Leur résistance est souvent insuffisante pour satisfaire aux normes correspondant aux utilisations dans lesquelles ces produits sont exposés à des chocs.

Pour tenter de concilier les deux aspects de résistance aux chocs et l'importance du caractère réfractaire, les solutions antérieures se sont portées vers l'association de matériaux divers. Une manière est par exemple de faire en sorte d'utiliser des feuilles de verre armées de treillis métalliques. Cette solution présente l'inconvénient évident d'altérer les qualités optiques des vitrages considérés. Une autre solution consiste à constituer des ensembles comprenant en plus des matériaux intumescents des feuilles traditionnellement utilisées dans les vitrages feuilletés de sécurité. Le plus usuel dans ce sens est l'utilisation de feuilles polymères transparentes qui présentent à la fois une bonne adhérence aux feuilles de verre et une bonne plasticité. Des feuilles typiques sont par exemple celles de polyvinylbutyral (PVB). D'autres matériaux sont aussi traditionnellement utilisés tels que l'EVA (ethylène-vinyl-acetate) ou des polymères équivalents.

Si les feuilles de polymères répondent bien par leur plasticité aux exigences en matière de résistance aux chocs, elles introduisent des éléments qui sont sensibles au feu. Elles se carbonisent plus ou moins rapidement en dégageant des fumées indésirables.

Les feuilles polymères choisies adhèrent bien au verre, mais insuffisamment aux couches intumescentes. Elles sont donc introduites entre des feuilles de verre qui ajoutent à la complexité de la structure du vitrage.

L'invention se propose de fournir des vitrages qui répondent simultanément aux exigences de résistance au choc et de fort caractère réfractaire, sans pour autant nécessiter la présence d'éléments entraînant les inconvénients rappelés ci-dessus.

Le but de l'invention est atteint par l'utilisation simultanée dans un vitrage de plusieurs types de couches de silicates alcalins de qualités différentes, dont au moins une couche à fort rapport molaire, et par suite fortement réfractaire, et au moins une couche à rapport molaire moins élevé présentant de ce fait une certaine plasticité.

Les inventeurs ont montré en particulier qu'il était possible de préparer des vitrages dans lesquels les couches de silicates alcalins présentant ces compositions distinctes, pouvaient aussi être au contact les unes des autres sans perdre leur individualité et les propriétés qui les caractérisent. Cette aptitude fait que la structure des vitrages peut être relativement plus légère que celle des vitrages antérieurs comportant des feuilles intercalaires polymères. Les vitrages présentant les structures selon l'invention sont d'autant plus avantageux par rapport à ceux comportant des feuille polymères que, le silicate alcalin à faible rapport molaire contribue aussi à la formation des propriétés de résistance au feu même si d'une façon limitée.

Les couches intumescentes de silicates alcalins très réfractaires présentent des rapports molaires SiO₂/M₂O systématiquement supérieurs à 3,5 et avantageusement égaux ou supérieurs à 4. Les produits le plus réfractaires obtenus ont des rapports molaires qui peuvent atteindre ou même dépasser 7. Les produits les plus usuels ont un rapport molaire qui ne dépasse pas 6. Les limites supérieures des rapports molaires tiennent compte principalement des conditions requises dans la préparation des couches, préparation dont il est question plus loin.

Les couches de silicates alcalins présentant des propriétés plastiques conférant aux vitrages les résistances mécaniques recherchées, ont un rapport molaire inférieur à celui des couches conférant le caractère réfractaire. En conséquence le rapport molaire de ces couches est systématiquement inférieur à 3,2 et de préférence inférieur à 3. Les couches les plus plastiques ont un rapport molaire égal ou inférieur à 2,8.

Selon l'invention pour que les caractéristiques respectives des couches soient bien distinctes, il est préférable que la différence entre leurs rapports molaires respectifs soit au moins de 0,8 et de préférence au moins 1.

En dehors du rapport molaire les propriétés des produits intumescents sont aussi largement tributaires d'autres constituants et notamment de leur teneur en eau et en composés polyols du type glycérol ou éthylène glycol. La formation d'un composé solide à partir d'une solution est liée à la teneur globale de ces constituants. La prise en masse est d'autant plus rapide que cette teneur globale est plus restreinte. En pratique la technique de formation des couches est fonction simultanément du rapport molaire SiO₂/M₂O et de cette teneur globale eau+polyols. De manière connue la stabilité des solutions avant durcissement de la couche, que celui-ci intervienne spontanément ou au cours d'une opération de séchage, nécessite une teneur globale d'autant plus élevée que le rapport molaire est lui-même plus élevé. Au-delà de la contribution de l'eau et des polyols dans les mécanismes de formation des couches, ces constituants influent aussi de manière distincte sur les propriétés des couches.

L'eau intervient dans la résistance au feu par son rôle dans le développement de la mousse. La teneur en eau est néanmoins limitée pour des questions de stabilité optique au vieillissement. Une teneur trop élevée tend à conduire à la formation d'un voile. Une teneur trop élevée occasionne aussi un abaissement de la température de ramollissement qui est préjudiciable à la tenue de la couche exposée au feu avant que celle-ci ne forme une mousse protectrice. Toutes ces raisons conduisent à un choix très rigoureux de la teneur la plus adéquate.

Les polyols ont pour spécificité de participer à la plasticité de la couche. Une teneur relativement élevée améliore sensiblement les caractéristiques mécaniques de résistance au choc. La présence de ces polyols améliore aussi la résistance aux basses températures. Les produits anti-feu comportant ces matériaux intumescents lorsqu'ils sont exposés aux conditions atmosphériques doivent pouvoir supporter sans dégradation les températures les plus basses. Les polyols permettent de manière connue une résistance accrue au froid. Des températures inférieures à -18°C peuvent ainsi être atteintes sans effet dommageable sur les qualités du vitrage.

Compte tenu des remarques précédentes, les couches utilisées dans les produits selon l'invention ont de préférence des teneurs en polyols différentes. De préférence les couches les plus réfractaires ont une teneur en polyol relativement limitée. Avantageusement la teneur en polyol de type glycérol ou éthylène glycol ne représente pas plus de 8% en poids et de préférence pas plus de 6% en poids de la couche considérée. A l'opposé la couche à faible rapport molaire, pour améliorer sa plasticité est avantageusement plus riche en polyol. Cette couche présente avantageusement une teneur comprise entre 15 et 25% en poids et de préférence entre 18 et 23% en poids de polyol.

La teneur en eau qui complète la composition de chaque couche est de préférence telle que la teneur globale eau+polyol s'établisse entre 30 et 45% en poids de la couche et de manière particulièrement préférée entre 35 et 40% en poids.

Les silicates alcalins entrant dans la composition des couches intumescentes sont traditionnellement des silicates soit de sodium, soit de potassium soit encore d'un mélange des deux dans des proportions variables. A l'expérience il est encore apparu aux inventeurs que la nature du silicate avait une influence sur les propriétés des couches et sur les conditions de leur production. Les silicates de potassium, toutes caractéristiques égales par ailleurs, s'expansent de manière plus importante que ceux de sodium. Le volume de la mousse formée améliore la résistance au feu. De manière moins favorable, cette meilleure expansion se traduit aussi par une tendance de la couche à un ramollissement plus important à haute température qui peut occasionner de défauts de stabilité de la couche. Les silicates de sodium à l'inverse sont moins facilement expansés mais moins sensible au fluage à haute température.

Le mélange de silicates de sodium et de potassium est de nature à combiner les propriétés des deux constituants. Cependant le mélange peut conduire à un abaissement des points de ramollissement. L'abaissement de la température de fluage peut être sensible même sans se situer au niveau de l'eutectique correspondant.

En pratique selon la couche considérée la teneur respective en silicate de sodium et de potassium est de préférence adaptée. Ainsi il est avantageux pour la couche à fort rapport molaire d'utiliser une couche majoritairement composée de silicate de potassium. De préférence les teneurs respectives sont telles que les rapport atomiques sont K/(K+Na) ≥ 90%.

De façon analogue, avantageusement la couche à rapport molaire moins élevé est majoritairement constituée de silicate de sodium. De façon préférée, le rapport atomique des alcalins est tel que Na/(Na+K) ≥50%.

Les vitrages anti-feu selon l'invention offrent la possibilité de structures variées pour parvenir à la combinaison des propriétés de résistance au feu et simultanément de résistance aux chocs. Les figures attachées représentent quelques unes des structures typiques de mise en oeuvre de l'invention. Ces figures représentent respectivement :
- la figure 1 est un vitrage de l'art antérieur répondant aux exigences mécaniques ;
- la figure 2 est une forme de réalisation de l'invention ne comprenant que deux feuilles de verre ;
- la figure 3 est une forme analogue à celle de la figure 2 présentant une structure symétrique ;
- la figure 4 est une autre forme de réalisation de l'invention comportant trois feuilles de verre.

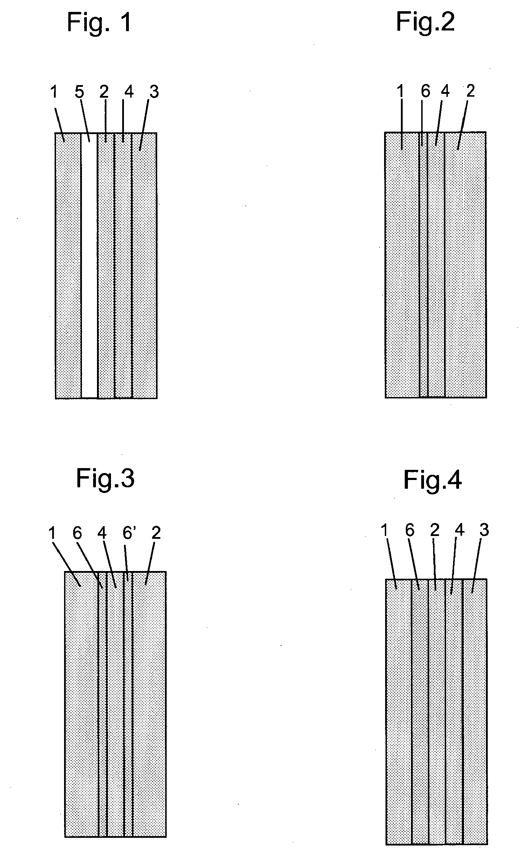

Dans un mode traditionnel antérieur représenté à la figure 1, le vitrage comporte simultanément une couche intumescente 4, pour les propriétés anti-feu, et une feuille de matériau polymère 5, notamment de PVB, pour conférer à l'ensemble des qualités mécaniques de résistance au choc. L'assemblage du vitrage nécessite la présence d'au moins 3 feuilles de verre, 1, 2, 3, afin de séparer la couche intumescente 4 et la feuille de matériau polymère. Le contact verre/couche intumescente ou verre/polymère est à même d'assurer une adhérence convenable des différents éléments constituant le vitrage. L'adhérence de la feuille polymère à la couche de silicate alcalin est en revanche insuffisante pour permettre un assemblage résistant à la délamination. La présence de la troisième feuille de verre est une nécessité qui présente l'inconvénient manifeste de rendre l'ensemble plus épais et surtout plus pesant. Il faut remarquer cependant que cet inconvénient est surtout sensible pour les produits correspondants aux normes les moins exigeantes en matière anti-feu. La présence d'une troisième feuille de verre permet en effet de contribuer aux propriétés de l'ensemble et ce d'autant que la feuille de verre intermédiaire 2 est plus épaisse. Mais globalement cette amélioration n'est qu'une façon de rendre moins pénalisante l'accroissement de poids et d'épaisseur.

La figure 2 est un mode de réalisation de l'invention qui vise à l'inverse les produits les plus légers répondant à cette exigence de résistance au feu et de résistance au choc. La structure présentée comprend deux feuilles de verre 1 et 2, et deux couches intumescentes 4 et 6 accolées l'une à l'autre, une des feuilles avec un rapport molaire élevé l'autre avec un rapport molaire moindre.

Le fait que les couches sont l'une et l'autre à base de silicate alcalin permet d'obtenir une bonne adhérence sans avoir besoin de recourir à un quelconque intercalaire. L'adhérence est obtenue notamment par passage à l'autoclave qui de toute façon est de mise lorsque l'on produit un vitrage à partir d'une feuille revêtue d'une couche intumescente à laquelle on associe une deuxième feuille de verre. Le processus reste donc inchangé.

Par ailleurs comme indiqué précédemment chacune des couches intumescentes contribue à l'établissement des propriétés anti-feu de l'ensemble. Les épaisseurs de ces couches peuvent être modulées en conséquence. Il convient cependant de garder à la feuille de rapport molaire moindre une épaisseur suffisante pour procurer la résistance mécanique recherchée. Les épaisseurs les plus petites des couches intumescentes pour les vitrages répondant aux normes les moins sévères, par exemple celles des produits désignés EI 30 (protection d'au moins 30 minutes) sont de l'ordre du millimètre. Chacune des couches n'est pas habituellement inférieure à 0,5mm et leur épaisseur ne dépasse pas habituellement 2mm. La combinaison des couches dans le modèle représenté à la figure 2 est telle que leur épaisseur combinée n'est pas inférieure à 1mm. Elle est de préférence au moins égale à 1,5mm.

Dans tous les cas, l'épaisseur de l'ensemble des couches intumescentes n'est pas très différente de celle des produits antérieurs qui ne comportent qu'une seule couche. Pour cette raison ni le poids ni l'encombrement ne diffère de façon significative de ceux des produits antérieurs qui n'offrent cependant pas les mêmes propriétés combinées. En particulier les produits selon l'invention, pour ceux dont les performances satisfont aux normes les moins sévères, sont utilisables sans nécessiter le changement des châssis usuellement utilisés. Ils peuvent sans difficulté et avec avantage, se substituer aux produits antérieurs.

Le produit présenté à la figure 2 a une structure asymétrique dans le sens où les deux couches intumescentes 4 et 6 ne sont pas de compositions identiques quelles que soient leurs épaisseurs. La figure 3 représente une structure comportant un ensemble comportant trois couches intumescentes 4, 6 et 6' disposées entre deux feuilles de verre. Cette structure comporte par exemple une couche centrale 4 à fort rapport molaire, et deux couches de part et d'autre offrant un rapport molaire moindre. Cette structure symétrique est disposée indifféremment par rapport aux chocs possibles auxquels elle est susceptible de résister, même si dans les structures du type représenté à la figure 2 la dissymétrie n'entraîne pas de différences significatives selon le coté susceptible de supporter un choc.

Qu'il s'agisse d'une structure du type de la figure 2 ou de la figure 3, il convient de souligner que l'une au moins des couches, qu'il s'agisse de celle à fort rapport molaire ou de celle à rapport molaire moindre, peut être produite par formation d'un gel qui durcit spontanément éventuellement en accélérant cette prise en masse sous l'effet de la chaleur. Ce mode de formation présente l'avantage de permettre la production de couches dont l'épaisseur n'est pas limitée à l'inverse des couches qui sont préparées par séchage d'une solution appliquée sur un support disposé horizontalement.

Dans le mode de la figure 2 chacune des deux couches intumescentes 4 et 6 peut être obtenue par séchage ou par durcissement d'un gel. Le durcissement du gel peut être opéré soit en appliquant la solution sur la feuille de verre disposée horizontalement. Après durcissement du gel, la feuille est alors assemblée soit avec une autre feuille ayant suivi un traitement analogue mais avec une composition différente, soit avec une feuille ne comportant pas de couche intumescente mais assemblée à la première feuille de manière à constituer un espace étanche au moyen d'un joint disposé à la périphérie des feuilles, espace qui est rempli à l'aide de la solution encore fluide de la deuxième composition de gel.

Les couches intumescentes de la structure de la figure 2 peuvent aussi résulter du séchage de deux compositions différentes sur chacune des feuilles de verre, les feuilles étant ensuite assemblées au cours d'une opération de calandrage et ou d'étuvage sous pression. Il est possible aussi d'associer une feuille portant une couche préalablement séchée avec une feuille comportant une couche intumescente préalablement durcie, ou encore comme précédemment, formée in situ en constituant un espace dans lequel la composition à durcir est versée alors qu'elle est encore fluide.

Il est toujours possible quel que soit leur mode de préparation, d'assembler deux couches séchées ou durcies pour autant qu'elles sont supportées par une feuille de verre. L'expérience montre à l'inverse que procéder à la formation d'une première couche séchée à laquelle on superpose ensuite une nouvelle application de solution que l'on sèche également, ne conduit pas à la simplification du séchage escomptée. Si une couche de faible épaisseur peut être séchée relativement vite, l'application d'une deuxième quantité de solution à sécher sur celle préalablement séchée conduit à un mélange des deux produits superposés avec l'inconvénient connu de la lenteur de séchage d'une couche épaisse. Lorsqu'on met en oeuvre une couche durcissable spontanément sous forme de gel, que ce soit au contact d'une couche préalablement séchée ou d'une autre couche durcie, un tel mélange ne semble pas se produire. Chaque couche conserve son individualité et les propriétés inhérentes à sa constitution.

A titre d'exemple la structure de la figure 3 peut être obtenue en formant sur chaque feuille de verre 1 et 2, une couche intumescente 6 et 6' identiques ou différentes, et résultant d'une opération de séchage ou de durcissement d'un gel, avec une couche 4 formée en remplissant un espace correspondant délimité entre les deux feuilles portant chacune une couche , au moyen d'un joint intercalaire disposé à la périphérie de ces feuilles.

Si comme ci-dessus un des objectifs poursuivi est de produire des structures relativement légères, et pour cette raison ne comportant que deux feuilles de verre, il est également possible selon l'invention de procéder à des assemblages dans lesquels des couches intumescentes répondant aux caractéristiques de l'invention se trouvent séparées les unes des autres par des feuilles de verre. La figure 4 présente une telle structure. Comme à la figure 1, trois feuilles de verre 1, 2, 3 séparent une première couche intumescente 4, par exemple à fort rapport molaire, d'une deuxième couche intumescente 6, à rapport molaire moindre. Ce type d'assemblage comme indiqué précédemment permet de conduire à des structures moins légères, mais qui permettent de satisfaire à des normes plus exigeantes, la présence de la feuille de verre intercalaire 2 ajoutant à la résistance de l'ensemble.

Les structures mettant en oeuvre les caractéristiques de l'invention ne sont pas limitées à celles présentées aux figures. Il est possible de multiplier les couches, ou combinaisons de couches, avec d'autres feuilles de verre. Des structures plus complexes sont notamment réalisables qui permettent d'atteindre les performances exigées des produits classés EI 60, EI 90 ou EI 120, selon la durée de protection recherchée.

Les modes de préparation des couches intumescentes utilisées selon l'invention sont analogues à ceux faisant l'objet de publications antérieures. On se reportera utilement notamment aux demandes de brevet publiées EP1960317, EP1855878, EP1993828, EP2010382, WO2009/065273.

Deux voies principales conduisent à l'obtention des matériaux intumescents : par séchage d'une solution de ces silicates, ou par gélification spontanée d'une solution à forte concentration en matière sèche. Les matériaux obtenus dans les deux cas différent sensiblement en composition et en propriétés.

La formation des couches par séchage présente comme principal inconvénient une préparation longue et minutieuse. La solution de silicate avec ses additifs est répandue sur un support horizontal et l'ensemble est soumis à un séchage prolongé dans une enceinte balayée par un courant gazeux chaud dont l'hygrométrie est régulée. La durée de l'opération de séchage peut atteindre plusieurs dizaines d'heures. Le plus souvent l'une des feuilles de verre est utilisée comme support de la solution pendant l'étape de séchage.

Dans le mode comprenant la formation d'un gel qui durcit spontanément, éventuellement en élevant la température pour accélérer le processus, la composition est préparée sous forme d'une solution qui correspond à la constitution finale de la couche intumescente. Cette solution doit être préparée immédiatement avant la mise en oeuvre en raison de son évolution rapide vers un état solide.

Il est aussi possible de substituer une opération de déshydratation à une part importante des opérations séchage. Dans ce cas la déshydratation est conduite sur la solution avant son application sur le support de séchage. La déshydratation est aussi particulièrement utile dans la préparation des compositions durcissant spontanément. La rapidité de l'opération de déshydratation permet en effet de concilier l'évolution rapide vers l'état solide de la composition déshydratée, et la mise en oeuvre de cette composition.

L'avantage de la déshydratation de la solution est de disposer de moyens supplémentaires permettant d'accélérer considérablement l'élimination de l'eau de la composition initiale. Dans les processus de séchage traditionnels les paramètres disponibles sont essentiellement les conditions hygrométriques et de température du flux gazeux de l'enceinte de séchage. En effectuant la déshydratation de la solution sous une forme plus compacte il est possible de disposer du facteur que représente la pression. L'élimination d'eau de la composition initiale est d'autant plus rapide que l'opération est effectuée en atmosphère dont la pression est la plus réduite possible.

Il est possible d'effectuer l'opération de déshydratation à partir de solutions habituellement utilisées dans les modes de préparation utilisant le séchage. Pour ces solutions on s'efforce normalement de limiter la teneur en eau initiale de façon à minimiser le temps de séchage. A titre indicatif, pour des compositions de rapport molaire de l'ordre de 4-5, la teneur en eau initiale des compositions soumises à séchage n'est pas habituellement inférieure à 45%. Pour des rapports molaires plus élevés la teneur en eau est nécessairement plus élevée.

La mise en oeuvre d'une étape de déshydratation, en accélérant l'élimination de l'eau permet de réduire la contrainte liée à la teneur en eau initiale. Il est possible de traiter des solutions dont la teneur en eau initiale est supérieure à 60% en poids, sans que le coût de l'opération soit rédhibitoire. En conséquence l'opération de déshydratation facilite également le traitement des compositions dont les rapports molaires sont les plus élevés envisagés, notamment des rapports de l'ordre de 5 à 7.

Dans la pratique, compte tenu des modalités de la déshydratation et du temps utile pour l'utilisation de la composition déshydratée, la teneur en eau du produit déshydraté se situe avantageusement entre 35 et 42% en poids, et le plus souvent entre 38 et 40%.

La température est un facteur important qui tend à figer la composition si elle s'élève trop. Pour éviter ce risque l'opération de déshydratation est conduite de préférence en maintenant la composition à une température qui ne dépasse pas 60°C et, de préférence, qui ne dépasse pas 50°C.

L'important est également que le temps pendant lequel la composition déshydratée se trouve à ces températures soit bien contrôlé. En pratique la mise en oeuvre du produit déshydraté est réalisé le plus tôt possible, mais pour des nécessités pratiques, il faut compter que le produit soit à même de demeurer dans des conditions rhéologique adéquates pendant un temps qui n'est pas inférieur à 15 minutes et de préférence pas inférieur à 30 minutes.

L'étape de déshydratation est avantageusement aussi brève que possible. Pour cela, et compte tenu des limitations de température imposées par l'évolution des compositions traitées, il est avantageux de procéder à l'élimination de l'eau en opérant en atmosphère sous pression réduite. La pression au dessus de la composition est avantageusement de 1 à 100hPa et de préférence de 10 à 50hPa. Plus la pression est réduite plus rapide est l'élimination de l'eau. Néanmoins le choix de la pression de traitement tient compte nécessairement d'impératifs économiques. Plus la pression est réduite, plus l'appareillage est coûteux en investissement et en fonctionnement. Les valeurs choisies font donc un bon compromis d'efficacité et de coût en ayant recours à des appareillages relativement communs pour d'autres applications.

Les appareillages utilisés pour conduire à une déshydratation rapide conduisent la composition sous une forme présentant une surface d'échange aussi grande que possible et sous faible épaisseur. Dans les appareillages usuels la composition est appliquée sous forme d'un film mince et qui se renouvelle en continu. Ceci est obtenu par un mouvement d'un système d'application de la composition sur les parois de l'appareillage dans des conditions dont des exemples sont donnés dans la suite de la description.

Même en ajoutant le temps de l'opération de déshydratation qui est très bref, il apparaît clairement que la combinaison de la déshydratation et du séchage est sensiblement plus courte que dans le cas du matériau intumescent préparé entièrement par séchage.

### Exemple 1. Préparation d'une couche à fort rapport molaire.

Une solution est obtenue qui est entièrement constituée de silicate de potassium à partir de solution de KOH à 50% en poids et de suspension de silice colloïdale à 50% en poids de silice (Klebosol 50R50). On y ajoute de la glycérine et du TMAH en solution aqueuse à 25%. La solution obtenue est soumise à déshydratation avant son utilisation. Les proportions du mélange et les caractéristiques de la couche après séchage sont reportées dans le tableau 1.

### Exemple 2.

Une préparation analogue à la précédente est réalisée à partir d'une solution de silicate de sodium à 50% en poids, et de nouveau de silice colloïdale comme à l'exemple 1. Les ajouts de glycérine et de TMAH sont également effectués, et la solution est appliquée sur une feuille de verre et soumise à séchage. Les quantités de produits mises en oeuvre et les compositions finales résultantes sont indiquées dans le tableau 1.

### Exemples 3 et 4.

Préalablement à la préparation de la solution de silicate alcalin, on procède à un mélange des solutions de KOH et de NaOH précédemment utilisées. Le mélange est réalisé avec 1000g de chacune des solutions conduisant à un rapport atomique Na/K de 1,40.

Au mélange préalable on ajoute la silice colloïdale et soit de l'éthylène glycol soit de la glycérine et du TMAH. Pour le premier mélange l'ajustement de la teneur en eau résulte d'un séchage, dans le second cas d'une déshydratation. Les quantités de produits mises en oeuvre et les compositions finales résultantes sont indiquées dans le tableau 1. Les quantités sont exprimées en grammes et les proportions dan le produit final sont données en pourcentages en poids.

**Tableau 1**

| Ex. | NaoH | KOH | Klebosol | EG | G | TMAH | Eau éliminée | Rm | H₂O | EG | G | TMAH |
|---|---|---|---|---|---|---|---|---|---|---|---|---|
| 1 | | 236,2 | 609,2 | 29 | | 30,1 | 189,1 | 4,59 | 38 | 4 | | 1 |
| 2 | 400 | | 1460 | | 63 | 62 | 418 | 4,61 | 38 | | 4 | 1 |
| 3 | 200 | | 580 | | 26,2 | 26 | 176,6 | 4,3 | 38 | | 4 | 1 |
| 4 | 200 | | 580 | 26,2 | | 26 | 176,6 | 4,3 | 38 | 4 | | 1 |

Dans ce tableau Rm est le rapport molaire SiO₂/(K₂O+Na₂O), EG est l'éthylène glycol, G est la glycérine.

### Exemples 5 à 8.

Comme précédemment une série de compositions pour des couches à faible rapport molaire sont préparées. Les solutions des exemples 5, 6, 7 et 8 sont toutes faites de silicate de potassium. La première est séchée les trois autres sont déshydratées. Les proportions des constituants et celles des compositions sont données comme précédemment dans le tableau 2.

**Tableau 2**

| Ex. | NaoH | KOH | Klebosol | EG | G | TMAH | Eau éliminée | Rm | H₂O | EG | G | TMAH |
|---|---|---|---|---|---|---|---|---|---|---|---|---|
| 5 | | 347,4 | 546,4 | | 105,5 | | 296 | 2,85 | 25 | | 15 | |
| 6 | | 347,4 | 546,4 | 105,5 | | | 296 | 2,85 | 25 | 15 | | |
| 7 | | 347,4 | 546,4 | | 107,3 | 28,7 | 314,5 | 2,85 | 25 | | 15 | 1 |
| 8 | | 347,4 | 546,4 | 107,3 | | 28,7 | 314,5 | 2,85 | 25 | 15 | | 1 |

### Exemples 9 à 12.

Un mélange préalable est réalisé de solutions KOH et NaOH à partir de 500g de KOH et 1040 de NaOH pour obtenir le rapport atomique Na/K de 2,92. La solution initiale est à 60% en eau.

Comme précédemment l'élimination de l'eau dans le mélange avec la silice colloïdale est effectuée par séchage pour l'exemple 9 et par déshydratation pour les suivants. Les compositions finales sont telles que reportées dans le tableau 3.

**Tableau 3**

| Ex. | NaoH+KOH | Klebosol | EG | G | TMAH | Eau éliminée | Rm | H₂O | EG | G | TMAH |
|---|---|---|---|---|---|---|---|---|---|---|---|
| 9 | 300 | 635,4 | | 110,1 | | 311,4 | 3 | 25 | | 15 | |
| 10 | 300 | 635,4 | 110,1 | | | 311,4 | 3 | 25 | 15 | | |
| 11 | 300 | 635,4 | | 112 | 30 | 330,8 | 3 | 25 | | 15 | 1 |
| 12 | 300 | 635,4 | 112 | | 30 | 330,8 | 3 | 25 | 15 | | 1 |

Partant des compositions préparées les couches à faible rapport molaire sont constituées avantageusement avec une épaisseur de 1,5mm. Pour les couches à fort rapport molaire les épaisseurs sont avantageusement différenciées en fonction de leur composition. Les couches qui sont peu susceptibles de fluer constituées de silicate de sodium peuvent être plus épaisses ce qui permet d'atteindre les meilleures performances au feu. Ces couches sont par exemples de 4mm d'épaisseur. Les couches entièrement à base de silicate de potassium sont de préférence d'épaisseur moindre par exemple de 2mm. Les couches à base d'un mélange de silicates de sodium et de potassium auront avantageusement une épaisseur intermédiaire par exemple de 3mm.

## Revendications

1. Vitrage "anti-feu" comportant un ensemble d'au moins deux feuilles de verre entre lesquelles sont disposées au moins deux couches de matériau intumescent à base de silicate alcalin hydraté, la composition de ces deux couches différant l'une de l'autre, l'une présentant un rapport molaire SiO2/Na2O supérieur à 3,5, l'autre présentant un rapport molaire inférieur à 3,2.

2. Vitrage selon la revendication 1 dans lequel les rapports molaires des deux couches différent l'un de l'autre d'une valeur au moins égale à 0,8, et de préférence au moins égale à 1.

3. Vitrage selon l'une des revendications précédentes dans lequel une couche présente un rapport molaire supérieur ou égal à 4.

4. Vitrage selon la revendication 3 dans lequel le rapport molaire est inférieur à 7 et de préférence inférieur à 6.

5. Vitrage selon l'une des revendications précédentes dans lequel une couche présente un rapport molaire au plus égal à 3.

6. Vitrage selon l'une des revendications précédentes dans lequel le silicate alcalin hydraté présente une teneur cumulée en eau et en polyol de type glycérine ou éthylène glycol de 30 à 45% en poids de chaque couche.

7. Vitrage selon la revendication 6 dans lequel la teneur cumulée en eau et polyol est comprise entre 35 et 40% en poids de chaque couche.

8. Vitrage selon l'une des revendications précédentes dans lequel la couche à rapport molaire élevé comporte une teneur en polyol qui n'est pas supérieure à 8% en poids de la couche et de préférence pas supérieure à 6%.

9. Vitrage selon la revendication 8 dans lequel la couche à rapport molaire moins élevé comporte une teneur en polyol qui est comprise entre 15 et 25% et de préférence entre 18 et 23% en poids de la couche.

10. Vitrage selon l'une des revendications précédentes dans lequel les alcalins constituants les couches intumescentes sont soit le potassium soit le sodium, soit un mélange des deux.

11. Vitrage selon la revendication 10 dans lequel la couche à rapport molaire élevé est à base essentiellement de silicate de potassium, le rapport atomique K/(K+Na) étant supérieur ou égal à 90%.

12. Vitrage selon la revendication 10 ou la revendication 11 dans lequel, la couche à rapport molaire le moins élevé est constituée majoritairement de silicate de sodium, le rapport Na/(Na+K) étant supérieur ou égal à 50%.

13. Vitrage selon l'une des revendications précédentes dans lequel les deux couches de compositions différentes sont accolées l'une à l'autre.

14. Vitrage selon la revendication 13 comportant successivement une première feuille de verre, une première couche de silicate alcalin à rapport molaire élevé, une couche de silicate alcalin à rapport molaire moins élevé, une autre couche de silicate à rapport molaire élevé de composition identique ou non à celle de la première couche et une deuxième feuille de verre.

15. Vitrage selon l'une des revendications 1 à 12 comprenant au moins une couche de silicate alcalin à rapport molaire élevé et une couche de silicate alcalin à rapport molaire moins élevé séparées par au moins une feuille de verre.

16. Vitrage selon l'une des revendications précédente dans lequel l'épaisseur de chaque couche de silicate alcalin à faible rapport molaire est comprise entre à 0,5 et 2mm.

17. Vitrage selon l'une des revendications précédentes dans lequel au moins l'une des couches de silicate alcalin est obtenue par séchage à partir d'une solution dont la teneur en eau est telle que la solution est stable à la température ordinaire.

18. Vitrage selon la revendication 17 dans lequel la ou les couches à rapport molaire moins élevé sont obtenues par séchage.

19. Vitrage selon l'une des revendications précédentes dans lequel au moins une couche à rapport molaire élevé est obtenue par formation spontanée d'un gel à partir d'une solution pratiquement sans séchage.

## Patentansprüche

1. Brandschutzverglasung, umfassend einen Satz von mindestens zwei Glasscheiben, zwischen denen mindestens zwei Schichten aus intumeszierendem Material auf Basis von hydratisiertem Alkalisilikat angeordnet sind, wobei die Zusammensetzung dieser beiden Schichten sich voneinander unterscheidet, wobei die eine ein Si02/Na20-Molverhältnis von mehr als 3,5 aufweist und die andere ein Molverhältnis von weniger als 3,2 aufweist.

2. Verglasung nach Anspruch 1, wobei sich die Molverhältnisse der beiden Schichten um einen Wert von mindestens 0,8 und vorzugsweise mindestens 1 voneinander unterscheiden.

3. Verglasung nach einem der vorhergehenden Ansprüche, wobei eine Schicht ein Molverhältnis größer gleich 4 aufweist.

4. Verglasung nach Anspruch 3, wobei das Molverhältnis weniger als 7 und vorzugsweise weniger als 6 beträgt.

5. Verglasung nach einem der vorhergehenden Ansprüche, wobei eine Schicht ein Molverhältnis von höchstens 3 aufweist.

6. Verglasung nach einem der vorhergehenden Ansprüche, wobei das hydratisierte Alkalisilikat einen kumulierten Gehalt an Wasser und Polyol vom Glycerin- oder Ethylenglykol-Typ von 30 bis 45 Gew.-% jeder Schicht aufweist.

7. Verglasung nach Anspruch 6, wobei der kumulierte Gehalt an Wasser und Polyol zwischen 35 und 40 Gew.-% jeder Schicht liegt.

8. Verglasung nach einem der vorhergehenden Ansprüche, wobei die Schicht mit dem hohen Molverhältnis einen Gehalt an Polyol aufweist, der nicht über 8 Gew.-% der Schicht und vorzugsweise nicht über 6 Gew.-% liegt.

9. Verglasung nach Anspruch 8, wobei die Schicht mit dem weniger hohen Molverhältnis einen Gehalt an Polyol aufweist, der zwischen 15 und 25 Gew.-% und vorzugsweise zwischen 18 und 23 Gew.-% der Schicht liegt.

10. Verglasung nach einem der vorhergehenden Ansprüche, wobei es sich bei den Alkalibestandteilen der intumeszierenden Schichten um Kalium oder Natrium oder eine Mischung davon handelt.

11. Verglasung nach Anspruch 10, wobei die Schicht mit dem hohen Molverhältnis im Wesentlichen auf Kaliumsilikat basiert, wobei das Atomverhältnis K/(K+Na) größer gleich 90% ist.

12. Verglasung nach Anspruch 10 oder Anspruch 11, wobei die Schicht mit dem weniger hohen Molverhältnis hauptsächlich aus Natriumsilikat besteht, wobei das Verhältnis Na/(Na+K) größer gleich 50% ist.

13. Verglasung nach einem der vorhergehenden Ansprüche, wobei die beiden Schichten mit unterschiedlicher Zusammensetzung aneinander angefügt sind.

14. Verglasung nach Anspruch 13, umfassend aufeinanderfolgend eine erste Glasscheibe, eine erste Alkalisilikatschicht mit hohem Molverhältnis, eine Alkalisilikatschicht mit weniger hohem Molverhältnis, eine weitere Silikatschicht mit hohem Molverhältnis und gegebenenfalls der gleichen Zusammensetzung wie die erste Schicht und eine zweite Glasscheibe.

15. Verglasung nach einem der Ansprüche 1 bis 12, umfassend mindestens eine Alkalisilikatschicht mit hohem Molverhältnis und eine Alkalisilikatschicht mit weniger hohem Molverhältnis, die durch mindestens eine Glasscheibe getrennt sind.

16. Verglasung nach einem der vorhergehenden Ansprüche, wobei die Dicke jeder Alkalisilikatschicht mit niedrigem Molverhältnis zwischen 0,5 und 2 mm liegt.

17. Verglasung nach einem der vorhergehenden Ansprüche, wobei mindestens eine der Alkalisilikatschichten durch Trocknen aus einer Lösung, deren Wassergehalt so beschaffen ist, dass die Lösung bei Raumtemperatur stabil ist, erhalten wird.

18. Verglasung nach Anspruch 17, wobei die Schicht bzw. Schichten mit weniger hohem Molverhältnis durch Trocknen erhalten wird bzw. werden.

19. Verglasung nach einem der vorhergehenden Ansprüche, wobei mindestens eine Schicht mit hohem Molverhältnis durch spontane Bildung eines Gels aus einer Lösung praktisch ohne Trocknen erhalten wird.

## Claims

1. Fireproof glazing comprising an assembly of at least two glass sheets, between which at least two layers of intumescent material based on hydrated alkali metal silicate are arranged, wherein these two layers differ from one another in composition, one having an SiO₂/Na₂O molar ratio higher than 3.5 and the other having a molar ratio lower than 3.2.

2. Glazing according to claim 1, in which the molar ratios of the two layers differ from one another by a value at least equal to 0.8 and preferably at least equal to 1.

3. Glazing according to one of the preceding claims, in which a layer has a molar ratio higher than or equal to 4.

4. Glazing according to claim 3, in which the molar ratio is lower than 7 and preferably lower than 6.

5. Glazing according to one of the preceding claims, in which a layer has a molar ratio at most equal to 3.

6. Glazing according to one of the preceding claims, in which the hydrated alkali metal silicate has a cumulated content of water and of polyalcohol such as glycerine or ethylene glycol of 30 to 45% by weight of each layer.

7. Glazing according to claim 6, in which the cumulated content of water and polyalcohol is in the range of between 35 and 40% by weight of each layer.

8. Glazing according to one of the preceding claims, in which the layer with a high molar ratio has a polyalcohol content of not more than 8% by weight of the layer and preferably not more than 6%.

9. Glazing according to claim 8, in which the layer with a lower molar ratio has a polyalcohol content in the range of between 15 and 25% and preferably between 18 and 23% by weight of the layer.

10. Glazing according to one of the preceding claims, in which the alkali metals forming the intumescent layers are either potassium or sodium or a mixture of the two.

11. Glazing according to claim 10, in which the layer with a high molar ratio is substantially based on potassium silicate, wherein the K/(K+Na) atomic ratio is higher than or equal to 90%.

12. Glazing according to claim 10 or claim 11, in which the layer with a lower molar ratio is predominantly formed from sodium silicate, wherein the Na/(Na+K) ratio is higher than or equal to 50%.

13. Glazing according to one of the preceding claims, in which the two layers of different compositions are glued to one another.

14. Glazing according to claim 13 comprising in succession: a first glass sheet, a first layer of alkali metal silicate with a high molar ratio, a layer of alkali metal silicate with a lower molar ratio, another silicate layer with a high molar ratio that is identical in composition or not to that of the first layer and a second glass sheet.

15. Glazing according to one of claims 1 to 12 comprising at least one alkali metal silicate layer with a high molar ratio and an alkali metal silicate layer with a lower molar ratio separated by at least one glass sheet.

16. Glazing according to one of the preceding claims, in which the thickness of each alkali metal silicate layer with a low molar ratio is in the range of between 0.5 to 2 mm.

17. Glazing according to one of the preceding claims, in which at least one of the alkali metal silicate layers is obtained by drying from a solution having a water content such that the solution is stable at the standard temperature.

18. Glazing according to claim 17, in which the layer or layers with a lower molar ratio is/are obtained by drying.

19. Glazing according to one of the preceding claims, in which at least one layer with a high molar ratio is obtained by spontaneous formation of a gel from a solution practically without drying.
